Europäisches Patentamt

European Patent Office

Office européen des brevets

(19)

(11) Publication number: **0 052 372**
**B1**

(12) # EUROPEAN PATENT SPECIFICATION

(45) Date of publication of patent specification: **14.05.86**

(51) Int. Cl.⁴: **F 16 D 55/224**

(21) Application number: **81109721.1**

(22) Date of filing: **16.11.81**

(54) **Caliper housing in a disc brake.**

(30) Priority: **18.11.80 JP 164859/80**

(43) Date of publication of application:
**26.05.82 Bulletin 82/21**

(45) Publication of the grant of the patent:
**14.05.86 Bulletin 86/20**

(84) Designated Contracting States:
**DE FR GB**

(56) References cited:
**EP-A-0 018 913**
**FR-A-1 340 290**
**GB-A-1 054 224**
**GB-A-1 194 435**
**GB-A-1 355 960**
**GB-A-2 016 617**
**GB-A-2 018 920**
**GB-A-2 042 659**
**US-A-3 548 973**

(73) Proprietor: **TOYOTA JIDOSHA KABUSHIKI KAISHA**
**1, Toyota-cho Toyota-shi**
**Aichi-ken 471 (JP)**

(73) Proprietor: **AISIN SEIKI KABUSHIKI KAISHA**
**2-1, Asahi-machi**
**Kariya-shi Aichi-ken (JP)**

(72) Inventor: **Katagiri, Masayoshi**
**22-149, 2-chome, Suigen-cho**
**Toyota-shi Aichi-ken (JP)**
Inventor: **Kondo, Toshio**
**44-5, Nishiura Higashiotomo-cho**
**Okazaki-shi Aichi-ken (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

# Description

The present invention relates to an improved caliper used in a disc braking system and more particularly, to improvements in structural configuration of the caliper housing for increased performance and service life of the braking system.

A generally U-shaped caliper or caliper housing for use in a disc brake system as it is for example described in EP—A—0 018 913 comprises: a brake actuating hydraulic cylinder portion wherein a fluid-actuated piston is slidably received; a reaction portion which is positioned opposite to the cylinder portion axially of a disc rotor rotating with a vehicle wheel, so that it sandwiches, in combination with the opposing cylinder portion, the disc rotor and brake pad assemblies disposed in parallel to, and on opposite sides of, the disc rotor; and a connecting portion which extends transversely or along the axis of the disc rotor over the periphery of the rotor and terminates in the reaction portion, thus connecting the cylinder and reaction portions to constitute an integral caliper housing. The caliper is supported by a fixed member of the vehicle in such manner that the former is movable axially of the disc rotor. It is noted in the pertinent art that the maximum permissible diameter of the disc rotor is limited by a specific wall thickness of the connecting portion of the caliper because the disc rotor and the caliper which straddles the rotor are disposed in a relatively limited space formed inside the rim of the vehicle wheel. Thus, it has been a long-felt but unsolved need to maximize the diameter of the disc rotor for enhancing the braking performance of a vehicle and more particularly, to thereby increase the operating area of the brake pads for prolonging the required time interval of maintenance of the braking system. It has been conventionally recognized, on the other hand, that the connecting portion of a disc brake caliper must have a wall thickness more than a certain lower limit (approximately 20mm) in order to ensure a rigidity enough to avoid the tendency of axially outward deflection of the opposing cylinder and reaction portions or separation thereof away from each other in opposite directions along the axis of the rotor when the piston in the cylinder portion is actuated by pressurized fluid upon brake application.

From GB—A—13 55 960 a caliper according to the preamble of claim 1 is known. This caliper comprises a beam structure wherein two C-shaped beams are provided on both upper and lower sides of a rectangular aperture in the connecting portion in order to connect the cylinder and reaction portions such that one beam carries one of two jaw portions and the other beam carries the other jaw portion. For reinforcing the caliper structure the two beams are connected to each other by a rib-like structure on the reaction portion.

With this structure the reaction forces acting on this caliper are mainly suspended in these two beams which for this reason have to be designed with a sufficient height in order to ensure a sufficient rigidity. Therefore with this known caliper it is not possible to effectively reduce the thickness of the connecting portion thereby contributing to an increased space under the lower surface thereof for accommodating a disc rotor of an increased diameter.

Accordingly it is the object of the present invention to provide a caliper of the above-mentioned kind whose connecting portion can be designed with a reduced wall thickness and thus contributes to increased space under the lower surface thereof for accommodating a disc rotor of an increased diameter, while still providing enough rigidity to overcome the tendency of outwardly separating deflection of the cylinder and reaction portions away from each other when the piston in the cylinder portion is actuated by pressurized fluid.

This object is achieved by the features as indicated in the characterizing part of claim 1.

According to the present invention by designing the connecting portion and the end wall such that the latter is joined to said connecting portion over its entire width or length in an arcuate manner or configuration, a crescent-shaped or arcuate end wall comes into existence thereby providing the possibility to perform the caliper housing as a shell in which the shell effect can be used for transmitting the reaction forces. In other words the inventors have recognized that by especially designing the end wall the reinforcing shell effect can be positively used for diminishing the wall thickness of the caliper housing while maintaining the required rigidity which is due to the fact that according to the invention stresses are more uniformly distributed over the whole shell structure.

Further advantageous modifications of the present invention are defined in the subclaims.

With the development according to claim 2 and 3 an advantageous compromise is achieved between a maximum of rigidity and special functional design.

From FR—A—1.340.290 a caliper-brake is known in which the caliper housing covers the disc rotor in a shell-like manner. However, this prior art shows a completely different type of caliper-brake in which one of the brake pads is directly fixed to the end wall the latter therefore being without any jaw portions and being strengthened by radial and circumferential ribs. This structure can be chosen because the reaction portion is fully closed so that the whole outer surface thereof can be provided with struttings. Since the inventor of this known brake design did neither realize nor disclose a design principle using a shell effect and since the object to be solved by this citation has nothing in common with the object to be solved by the present invention, FR—A—1.340.290 cannot give any suggestions for finding out the feature combination of the present invention.

A preferred embodiment of the present invention is illustrated in the accompanying drawings in which:

Fig. 1 is a plan of a disc brake including the caliper, and

Fig. 2 and 3 are a front elevation and a side elevation partly in cross-section, of the caliper shown in Fig. 1, respectively.

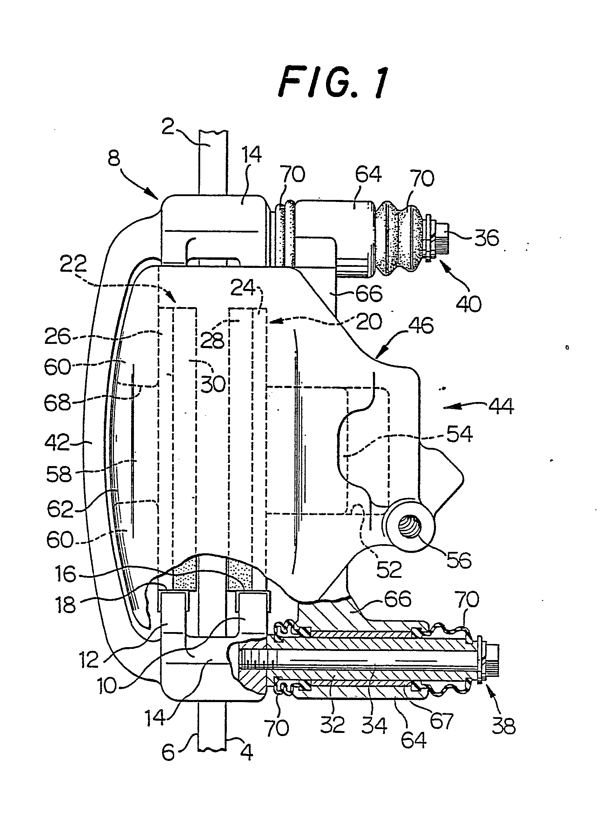

Referring first to Fig. 1, there is shown a disc brake of pin-sliding caliper type which includes a disc rotor 2 having friction surfaces 4 and 6 on both sides thereof and rotating about its axis together with an axle of a vehicle not shown. Adjacent to the disc rotor 2 is disposed a non-rotatable torque member 8 in such manner as to straddle the rotor 2. The torque member 8 which is fixed to the knuckle, axle housing or other member of the vehicle, includes planar portions 10 and 12 extending along the friction surfaces 4 and 6 of the disc rotor 2 and a connecting portion 14 which is bridged between the planar portions 10 and 12 axially of the disc rotor 2 and over the periphery thereof to connect the portions 10 and 12. In the central parts of the planar portions 10 and 12, there are formed openings 16 and 18, respectively, within which are movably received an inner and an outer pad assemblies 20 and 22, respectively, with one face thereof facing the respective friction surfaces 4, 6 of the rotor 2. The inner pad assembly 20 consists of a backing plate 24 and a friction member 28, and the outer pad assembly 22 of a backing plate 26 and a friction member 30. On both sides of the opening 16 there are fixed a pair of axially extending parallel pins 38 and 40 to the torque member 8. Each of the pins 38 and 40 includes a sleeve 32 and a bolt 34, 36 inserted therethrough to retain the sleeve 32. On the side opposite to the pins 38 and 40 axially of the disc rotor 2, there is formed an arcuately or chordwise extending rib 42 as an integral part of the planar portion 12, both ends thereof merging into the planar portion 12 at the positions symmetrical, with respect to the rotor 2, to the positions at which the pair of pins 38 and 40 are retained.

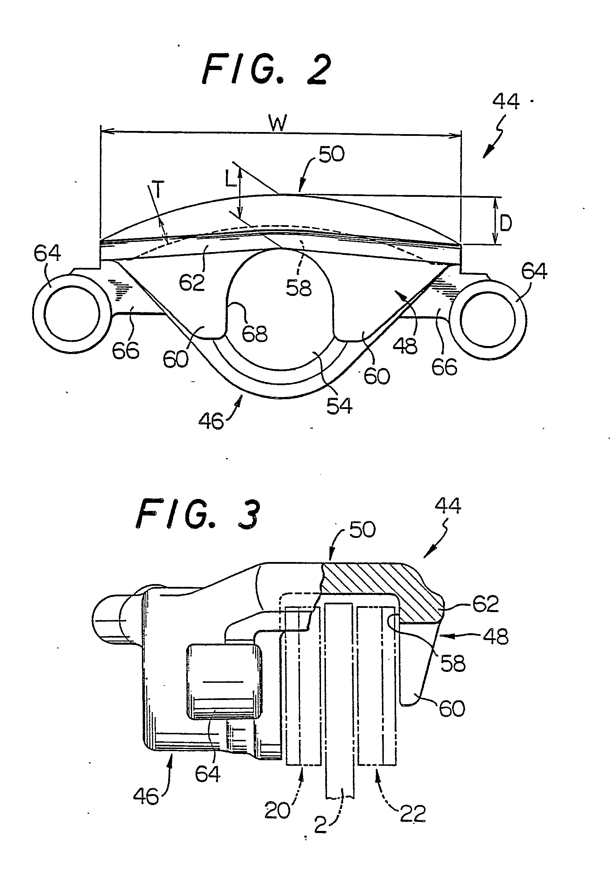

In Figs. 2 and 3, there is illustrated a caliper 44 which comprises a hydraulic pressure cylinder portion 46, a reaction portion 48 facing the cylinder portion 46 axially of the disc rotor 2, and a connecting portion 50 extending axially between the cylinder and reaction portions 46 and 48 to connect them at their upper ends as seen in Fig. 3. These three portions 46, 48 and 50 constitute an integral caliper housing structure of virtually saddle-like configuration which straddles the disc rotor 2 and the pad assemblies 20 and 22 disposed on both sides of, and in parallel to, the disc rotor 2. In more detail, the cylinder portion 46 has, in a part thereof facing the inner pad assembly 20, a cylinder bore 52 within which a piston 54 is slidably received in a fluid-tight manner. Numeral 56 designates a fluid inlet port communicating with the inner chamber of the cylinder bore 52. The connecting portion 50 extends from the upper extremity of the cylinder portion 46 as seen in Fig. 3, forming a substantially circular arc configuration, concentric to the disc rotor 2, in cross section taken along the sides of the disc rotor, i.e., perpendicularly to the axis of the cylinder portion 46 as seen in Fig. 2. The reaction portion 48 includes an arcuate or crescent-shaped end wall 58 facing the cylinder portion 46 and extending radially inwardly of the disc rotor 2 from the entire length of the extremity of the connecting portion 50 which is opposite to the extremity of the same terminating in the said upper extremity of the cylinder portion 46, and further includes a pair of jaw portions 60 which are spaced from each other circumferentially of the disc rotor 2 and extended radially inwardly further from the end wall 58. The end wall thereby is joined to the connecting portion over its entire length in an arcuate manner. The pair of jaw portions 60 are so formed that their thickness decreases from the base toward the tip. The end wall 58 is provided, at its radially inward end portion, with a rib 62 which protrudes in the axial direction away from the cylinder portion 46 as seen in Fig. 3, with the amount of protrusion increasing from its longitudinal end portions toward its central portion as seen in Fig. 1. When assumed that (a) the width of the connecting portion 50 is W, (b) the thickness thereof is T, (c) the depth of the circular arc of the connecting portion is D, and (d) the distance from the external periphery of the connecting portion 50 to the lower end of the end wall 58 in the middle portion thereof is L, W/T is preferable to be in the invented caliper not less than 11 against the traditional value 4—9, in particular preferable to be in the range of 12—20; D/T is preferable to be not less than 1.3 against the traditional value 0.3—0.7, particular desirable range is 1.5—2.5; and L/T is preferable to be not less than 1.4 against the traditional value of 1 or less, and a particularly recommendable range of the value is 1.5—2.5.

On both sides of the cylinder portion 46 of the thus constructed caliper 44, there are provided a pair of radially spaced arms 66 as seen in Fig. 1, each of which includes at its end a bored boss 64 through which the pin 38, 40 is inserted via a collar 67, whereby the caliper 44 is supported freely movably axially of the disc rotor 2. The pins 38 and 40 are provided at their exposed portions with dust-tight boots 70.

In operation of the disc brake arranged as described above upon actuation of the piston, the piston 54 of the caliper 44 is forced out by the pressurized fluid toward the inner pad assembly 20 which, in turn, is urged onto the friction surface 4 of the disc rotor 2, and the reaction portion 48 urges by reaction the outer pad assembly 22 onto the friction surface 6. During this actuation of the brake, a moment is applied to the connecting portion 50 causing the central part to be deflected downwardly in Fig. 3. Actually, however, the connecting portion 50 of the caliper 44 of this embodiment which is of circular configuration in cross-section, is protected against such downward deflection by virtue of the structure of the reaction portion 48 which is characterized by the way of joining the end wall to the connecting portion i.e. by the arcuate or crescent-shaped end wall 58 extending radially inwardly from the extremity of the connecting portion 50 as well as by the pair of jaw portions 60, an inverted-U-shaped opening 68 being defined therebetween such that the extreme bottom is located at a point radially inwardly away from the connecting portion 50. In other words, the end wall 58 and the connecting portion 50 constitute a reinforcement frame structure which ensures a high level of rigidity for preventing the cylinder and reaction portions 46 and 48 from separating from each other axially of the disc rotor 2. Although the end wall 58 itself is also subjected to a force transmitted from the pair of jaw portions 60 in the direction causing the wall 58 to be deflected away from the cylinder portion 46, the wall 58 is not actually so deflected because its rigidity is enhanced by the rib 62. It is thus possible to allow the connecting portion 50 to have a reduced thickness as compared to that of the similar portion of the conventional calipers. According to the experimentation carried out by the inventors, the thickness may be reduced to about a half (approximately 10mm) that of the conventional calipers. This means, it is possible to use a disc rotor which has an increased diameter in proportion to the obtained reduction in wall thickness of the connecting portion 50. Such increase in disc rotor diameter results in an increase in working area of the friction surfaces 4 and 6 and allows the use of larger pad assemblies 20 and 22, whereby the wear life of the brake may be considerably improved. In addition, the reduction in wall thickness of the connecting portion results in reduced weight of the brake. Further, it is noted that these improvements may be readily accomplished within the scope of braking system's components, i.e., without the need of modifications of the wheel rim or other members of the vehicle.

While the specific embodiment described above refers to a pin-sliding caliper type of disc brake, the invention may also apply to other types of disc brake as long as they use a caliper straddling the disc rotor.

It is noted that the connecting portion may have an opening or openings therethrough for ventilation or inspection to the extent that such openings do not reduce the rigidity of the reinforcement frame structure previously indicated.

Furthermore, it is possible to give the connecting portion 50 an increased length of arc defining the cross sectional circular arc configuration for the purpose of increasing the rigidity of the reinforcement frame structure.

## Claims

1. A caliper (44) for a vehicle disc brake including a hydraulic cylinder portion (46) within which a piston (64) is slidably received, a reaction portion (48) located in confrontation with said hydraulic cylinder portion, and a connecting portion (50) connecting said hydraulic cylinder and reaction portions at upper ends thereof, said caliper (44) being adapted to be supported by a non-rotatable member (8) of a vehicle so that it is freely movable along the axis of a disc rotor (2), said reaction portion (48) having a pair of jaw portions (60) further extending radially inwardly from said connecting portion (50), said reaction portion (48) comprising a radially inwardly extending end wall (58), from which said pair of jaw portions (60) extend further radially inwardly and which includes a rib (62) which is formed along the radially inward edge of said end wall (58) and which protrudes axially of said disc rotor (2) in a direction away from said cylinder portion (46), the axial protrusion of said rib (62) increasing from its opposite ends towards its centre, characterized in that said connecting portion (50) is in the form of a uniform cylindrical shell concentric to said disc rotor (2), that said end wall (58) is crescent-shaped and joined to said connecting portion (50) over its entire width (W) in an arcuate manner, that a quotient of the distance (L) from the external periphery of said connecting portion (50) to said radially inward edge of the end wall (58) in the middle portion thereof, divided by the thickness (T) of said connecting portion (50), is not less than 1.4, and that the quotient of the width (W) of said connecting portion (50) in circumferential direction divided by said thickness (T) of the connecting portion (50) is within a range of 12 to 20.

2. A caliper as recited in claim 1, characterized in that said pair of jaw portions (60) define a substantially inverted-U-shaped opening therebetween as seen facing said cylinder portion (46), an extreme bottom thereof being located at a point radially inwardly away from said connecting portion (50) and has an axial wall thickness progressively decreasing toward a radially inward end thereof remote from said end wall (58).

3. A caliper as recited in claim 2, characterized in that the extreme bottom of said inverted-U-shaped opening (68) is in line with the radially inward edge of the end wall (58).

4. A caliper as recited in one of the claims 1 to 3, characterized in that the quotient of the distance (L) from the external periphery of said connecting portion (50) to said radially inward edge of the end wall (58) in the middle portion thereof, divided by the thickness (T) of said connecting portion (50) is within a range of 1.5 to 2.5.

5. A caliper as recited in one of the claims 1 to 4, characterized by an inspection or ventilation opening in the connecting portion (50).

## Revendications

1. Un étrier (44) pour frein de véhicule, comportant une partie formant cylindre hydraulique (46) dans laquelle un piston (64) est monté à coulissement, une partie de réaction (48) disposée en face de ladite partie formant cylindre hydraulique, et une partie de connexion (50) reliant ladite partie formant cylindre hydraulique et ladite partie de réaction à leurs extrémités supérieures, ledit étrier (44) étant agencé de manière à pouvoir être supporté par un organe non rotatif (8) d'un véhicule de façon telle qu'il soit librement mobile le long de l'axe d'un rotor à disque (2), ladite partie de réaction (48) comportant deux parties de mâchoire (60) qui s'étendent, de plus, radialement vers l'intérieur à partir de ladite partie de connexion (50), ladite partie de réaction (48) comportant une paroi terminale (58) s'étendant radialement vers l'intérieur à partir desdites deux parties de mâchoire (60) et à partir de laquelle lesdites deux parties de mâchoire (60) s'étendent davantage radialement vers l'intérieur, et qui comporte une nervure (62) formée le long du bord radialement intérieur de ladite paroi terminale (58), tout en faisant saillie axialement par rapport audit rotor à disque (2) dans une direction opposée à ladite partie formant cylindre (46), la longueur de saillie axiale de ladite nervure (62) s'accroissant à partir de ses extrémités opposées vers son centre, caractérisé en ce que ladite partie de connexion (50) présente la forme d'une coque cylindrique uniforme concentrique audit rotor à disque (2), en ce que ladite paroi terminale (58) présente une forme de croissant et est reliée à ladite partie de connexion (50) sur toute sa largeur (W) selon un tracé incurvé, en ce qu'un quotient de la distance (L) entre la périphérie extérieure de ladite partie de connexion (50) et ledit bord radialement intérieur de la paroi terminale (58) dans la partie centrale de celle-ci, divisée par l'épaisseur (T) de ladite partie de connexion (50) n'est pas inférieur à 1,4, et en ce que la quotient de la largeur (W) de ladite partie de connexion (50) dans la direction circonférentielle, divisée par ladite épaisseur (T) de la partie de connexion (50) est compris entre 12 et 20.

2. Un étrier tel que défini dans la revendication 1, caractérisé en ce que lesdites deux parties de mâchoire (60) définissent entre elles une ouverture présentant sensiblement la forme d'un U renversé, telle que vue en regardant ladite partie formant cylindre (46), un fond extrême en étant situé à un endroit espacé radialement et vers l'intérieur de ladite partie de connexion (50), tout en présentant une épaisseur de paroi axiale décroissant progressivement vers une extrémité radialement intérieure qui est espacée de ladite paroi terminale (58).

3. Un étrier tel que défini dans la revendication 2, caractérisé en ce que le fond extrême de ladite ouverture (68) en forme de U renversé est aligné sur le bord radialement intérieur de ladite paroi terminale (58).

4. Un étrier tel que défini dans une des revendications 1 à 3, caractérisé en ce que le quotient de la distance (L) entre la périphérie extérieure de ladite partie de connexion (50) et ledit bord radialement intérieur de la paroi terminale (58) dans la partie centrale de celle-ci, divisée par l'épaisseur (T) de ladite partie de connexion (50) est compris entre 1,5 et 2,5.

5. Un étrier tel que défini dans une des revendications 1 à 4, caractérisé en ce que la partie de connexion (50) est pourvue d'une ouverture de visite ou de ventilation.

**Patentansprüche**

1. Bremssattel (44) für eine Fahrzeug-Scheibenbremse mit einem Hydraulik-Zylinderabschnitt (46), in dem ein Kolben (64) verschiebbar enthalten ist, einem Reaktionsabschnitt (48), der dem Hydraulik-Zylinderabschnitt gegenüberliegend angeordnet ist, und einem Verbindungsabschnitt (50), der den Hydraulik-Zylinderabschnitt und den Reaktionsabschnitt an ihren oberen Enden verbindet, wobei der Bremssattel (44) so ausgeführt ist, daß er von einem nicht drehbaren Teil (8) eines Fahrzeugs so gehalten wird, daß er entlang der Achse einer Bremsscheibe (2) frei bewegbar ist, wobei der Reaktionsabschnitt (48) ein Paar Backenabschnitte (60) aufweist, die vom Verbindungsabschnitt (50) weiter radial nach innen verlaufen, wobei der Reaktionsabschnitt (48) eine radial nach innen verlaufende Endwand (58) aufweist, von der das Paar Backenabschnitte (60) weiter radial nach innen verläuft und die eine Rippe (62) aufweist, die längs des radial inneren Randes der Endwand (58) ausgebildet ist und sich axial zur Bremsscheibe (2) in Richtung von dem Zylinderabschnitt (46) weg hervorwölbt, wobei die axiale Vorwölbung der Rippe (62) von ihren entgegengesetzten Enden zu ihrer Mitte hin anwächst, dadurch gekennzeichnet, daß der Verbindungsabschnitt (50) die Form einer gleichförmigen, zylindrischen, zur Bremsscheibe (2) konzentrischen Schale aufweist, daß die Endwand (58) Sichelform besitzt und über ihre ganze Breite (W) in bogenförmiger Weise mit dem Verbindungsabschnitt (50) verbunden ist, daß ein Quotient aus dem Abstand (L) der äußeren Umfangsfläche der Verbindungsabschnittes (50) vom radial inneren Rand der Endwand (58) in ihrem mittlerem Abschnitt geteilt durch die Dicke (T) des Verbindungsabschnittes (50) nicht kleiner als 1,4 ist und daß der Quotient aus der Breite (W) des Verbindungsabschnittes (50) in Umfangsrichtung geteilt durch die Dicke (T) des Verbindungsabschnittes (50) in einem Bereich von 12 bis 20 liegt.

2. Bremssattel nach Anspruch 1, dadurch gekennzeichnet, daß das Paar Backenabschnitte (60) zwischen sich eine, in Richtung des Zylinderabschnitts (46) gesehen, im wesentlichen umgekehrte U-Form aufweisende Öffnung abgrenzt, wobei ihre unterste Bodenwand an einem Punkt radial nach innen, entfernt von dem Verbindungsabschnitt (50) angeordnet ist, und eine axiale Wanddicke aufweist, die sich von der Endwand (58) bis zu ihrem radial inneren Ende fortlaufend verringert.

3. Bremssattel nach Anspruch 2, dadurch gekennzeichnet, daß die unterste Bodenwand der umgekehrte U-Form aufweisenden Öffnung (68) in Übereinstimmung mit dem radial inneren Rand der Endwand (58) steht.

4. Bremssattel nach einem der Ansprüche 1 bis 3, dadurch gekennzeichnet, daß der Quotient aus dem Abstand (L) der äußeren Umfangsfläche des Verbindungsabschnittes (50) vom radial inneren Rand der Endwand (58) in ihrem mittleren Abschnitt geteilt durch die Dicke (T) des Verbindungsabschnitts (50) in einem Bereich von 1,5 bis 2,5 liegt.

5. Bremssattel nach einem der Ansprüche 1 bis 4, gekennzeichnet durch eine Inspektions- oder Belüftungsöffnung im Verbindungsabschnitt (50).

# FIG. 1

# FIG. 2

# FIG. 3